# EUROPÄISCHE PATENTSCHRIFT

(11) **EP 4 067 852 B1**
(45) Veröffentlichungstag und Bekanntmachung des Hinweises auf die Patenterteilung: **11.10.2023**
(21) Anmeldenummer: 21166224.2
(22) Anmeldetag: 31.03.2021
(51) Int. Cl.: G01L 19/00, G01L 19/08, G01L 19/14

(54) **VORRICHTUNG ZUM ÜBERWACHEN DES DRUCKES**
DEVICE FOR MEASURING PRESSURE
DISPOSITIF DE SURVEILLANCE DE LA PRESSION

(43) Veröffentlichungstag der Anmeldung: 05.10.2022
(73) Patentinhaber: Leeb, Robert, 9545 Radenthein (AT)
(72) Erfinder: Leeb, Robert, 9545 Radenthein (AT)
(74) Vertreter: Beer & Partner Patentanwälte KG

(56) Entgegenhaltungen:
- EP-A1- 3 128 305
- WO-A1-95/15484
- CN-U- 207 502 098

## Beschreibung

Die Erfindung betrifft eine Vorrichtung zum Überwachen des Druckes eines Fluids, insbesondere Wasser, in einer Leitung.

Bekannt ist eine Vorrichtung zum Überwachen eines Druckes eines Fluids in einer Leitung. Die bekannte Vorrichtung besitzt ein Gehäuse, dessen Innenraum mit der Leitung kommuniziert, einen Drucksensor und einen Schalter, der den Drucksensor aktiviert, wobei das Gehäuse über einen Stutzen (DE 10 2006 027 507 A1 und EP 3 588 042 A1) mit der Leitung verbunden ist.

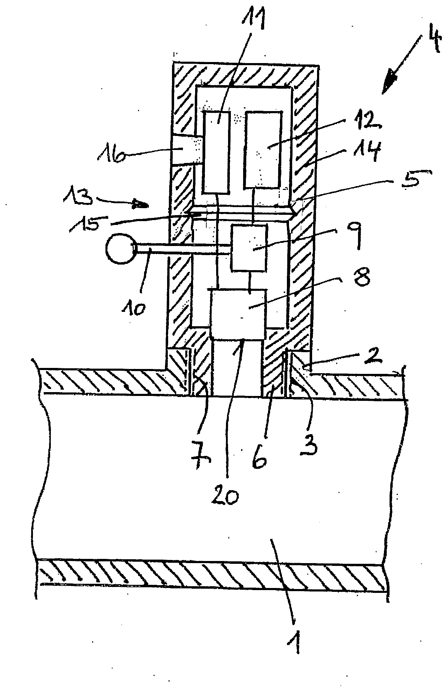

EP 3 128 305 A1 zeigt und beschreibt einen hermetischen Drucksensor. Der Drucksensor umfasst ein hermetisches Gerät mit einem Membranabschnitt, an dem ein Belastungssensor befestigt ist. Das Gehäuse besteht aus zwei Teilen, von welchen ein Teil den Membranabschnitt aufnimmt und eine Öffnung für den Eintritt des Fluids, dessen Druck zu messen ist, aufweist. Die Teile des Gehäuses sind miteinander hermetisch verbunden. Bei den in Fig. 4 und Fig. 5 der EP 3 128 305 A1 gezeigten Ausführungsformen liegt die Wand des unteren Teils des Gehäuses mit einer Rippe, die dünner ist als die Wand, an dem anderen Teil des Gehäuses an. Der durch die Rippe - und nicht durch eine Nut - gebildete dünnere Bereich der Wand liegt an einem, nämlich dem freien Ende der Wand und nicht "in der Wand". Ein Zweck dieser "Rippe" ist in EP 3 128 305 A1 nicht angegeben. Die Rippe erlaubt es nicht, das Gehäuse zu knicken. EP 3 128 305 A1 offenbart vorwiegend Einzelheiten des Membranabschnittes in dem unteren Teil des Gehäuses.

CN 207 502 098 U offenbart ein tragbares, elektronisches Gerät zum Messen des Druckes einer Flüssigkeit. Das Gerät umfasst u.a. eine Stromquelle, einen Schalter sowie weitere Bauteile.

WO 95/15484 A1 offenbart das Übertragen von Druckdaten, die in einem Reaktor erfasst werden. Dabei wird ein elektromagnetisches Signal in ein optisches Signal umgewandelt. Das optische Signal wird von einem Transmitter-Modul empfangen und an einen optischen Transceiver weitergegeben. Schließlich wird das Signal nach erneutem Umwandeln einem Computer oder Drucker aufgegeben.

Beim Herstellen von Fluid enthaltenden Leitungen in Neubauten, wie Wasserleitungen und/oder Leitungen für Zentralheizungen und/oder Gasleitungen, werden die Leitungen vom Installateur hergestellt und nach Abschluss seiner Arbeiten auf Dichtheit überprüft, indem die Leitung unter Überdruck gesetzt wird.

Es kann aber vorkommen, dass durch weitere Arbeiten am Neubau die vorher dichten Leitungen beschädigt werden, sodass Undichtheit vorliegt.

Der Erfindung liegt die Aufgabe zugrunde, eine Vorrichtung der eingangs genannten Gattung zur Verfügung zu stellen, mit der bis zum Abschluss der Arbeiten sichergestellt ist, dass ein Druckverlust, der in der Leitung auftritt, bemerkt wird, wobei es erkennbar gemacht werden kann, dass die Vorrichtung schon verwendet worden ist.

Gelöst wird diese Aufgabe erfindungsgemäß mit einer Vorrichtung, welche die Merkmale von Anspruch 1 aufweist.

Bevorzugte und vorteilhafte Ausgestaltungen der erfindungsgemäßen Vorrichtung sind Gegenstand der Unteransprüche.

Da bei der erfindungsgemäßen Vorrichtung ein Gehäuse vorgesehen ist, das mit der Leitung, in welcher das unter Druck stehende Fluid enthalten ist, kommuniziert, und da in dem Gehäuse ein Drucksensor vorgesehen ist, wird erfasst, ob in der Leitung der gewünschte (vorgegebene) Druck herrscht. Die Schwächung des Gehäuses der Vorrichtung erlaubt es, das Gehäuse zu knicken, wenn es verwendet worden ist. So ist eine unerwünschte Wiederverwendung der Vorrichtung vermieden.

Zusätzlich ist in der erfindungsgemäßen Vorrichtung ein Schalter vorgesehen, der - wenn er eingeschaltet ist - den Drucksensor aktiviert.

Im Rahmen der Erfindung kann in dem Gehäuse ein Stromspeicher vorgesehen sein, der über den Schalter mit dem Drucksensor verbunden ist.

In einer bevorzugten Ausführungsform der Erfindung ist der Schalter von außerhalb des Gehäuses betätigbar, beispielsweise indem ein Stift "herausgezogen" wird, worauf der Schalter eingeschaltet und der Drucksensor aktiviert ist, da er mit der Stromquelle verbunden worden ist.

In einer Ausführungsform der Erfindung ist vorgesehen, dass die Vorrichtung ein Gerät zum Abgeben von optischen und/oder akustischen Signalen ("Signalgeber") aufweist, das betätigt wird, sobald der Drucksensor einen unerwünschten Druckabfall in der überwachten Leitung festgestellt hat. Das Gerät kann optische und/oder akustische Signale abgeben und ist beispielsweise so angeordnet, dass die optische und/oder akustische Signale abgebende Signaleinrichtung die Wand des Gehäuses durchgreifend vorgesehen ist.

Weitere Einzelheiten und Merkmale der erfindungsgemäßen Vorrichtung ergeben sich aus der nachstehenden Beschreibung eines bevorzugten Ausführungsbeispiels anhand der Zeichnung, in welcher teilweise schematisch und im Schnitt eine erfindungsgemäße Vorrichtung im Schnitt dargestellt ist.

Vorgesehen ist eine Leitung (Rohr) 1, in der ein Fluid, wie Wasser, enthalten ist, das unter Druck gesetzt ist, um die Dichtheit der Anlage, welche die Leitung 1 enthält, festzustellen.

An der Leitung 1 ist ein Ansatz 2 vorgesehen, der für Wasserleitungen üblich ist und der durch einen Schraubstopfen verschlossen werden kann, indem dieser in den Ansatz 2 mit Innengewinde 3 eingeschraubt wird.

Beim Benutzen der Vorrichtung 4 gemäß der Erfindung ist in den Ansatz 2 das Gehäuse 5 der erfindungsgemäßen Vorrichtung 4 eingeschraubt, indem ein Stutzen 6 mit Außengewinde 7 in den Ansatz 2 hineingedreht worden ist.

Im Inneren des Gehäuses 2 sind ein Drucksensor 8 und ein Schalter 9 vorgesehen. Der Drucksensor 8 ist dicht in den Stutzen 6 eingesetzt, wobei seine Drucksensorfläche 20 in den Innenraum des Stutzens 6 weist, so dass die Drucksensorfläche 20 dem Druck des Fluid (Wasser, Gas) in der Leitung 1 ausgesetzt ist. Der Schalter 9 umfasst einen Stift 10, der durch die Wand 17 des Gehäuses 5 der erfindungsgemäßen Vorrichtung herausgeführt ist, sodass er von außen betätigt werden kann, um den Schalter 9 einzuschalten. Beispielsweise wird der Schalter 9 geschlossen, wenn der Stift 10 (teilweise) herausgezogen ist.

Der Schalter 9 ist zwischen dem Drucksensor 8 und einem Stromspeicher 12 (Batterie) angeordnet, sodass der Drucksensor 8 bei durch Herausziehen des Stiftes 10 geschlossenem Schalter 9 mit elektrischem Strom versorgt und aktiviert ist.

Mit dem Drucksensor 8 ist eine Vorrichtung 11 zum Abgeben von Signalen verbunden, die aktiviert wird, wenn der Drucksensor 8 feststellt, dass in dem Fluid in der Leitung 1 ein Druck herrscht, der unterhalb des gewünschten (vorgegebenen) Druckes liegt. Aus der Zeichnung ist ersichtlich, dass der akustische und/oder optische Signale abgebende Teil 16 der Vorrichtung 11 eine Öffnung in der Wand 14 des Gehäuses 5 durchsetzt.

In der Wand 14 des Gehäuses ist eine Schwächung 13 vorgesehen, die es erlaubt, das Gehäuse 5 zu knicken, wenn es nicht mehr benötigt wird, um eine unerlaubte und unerwünschte Wiederverwendung zu verhindern. Im gezeigten Ausführungsbeispiel ist die Schwächung 13 der Wand 14 des Gehäuses 5 durch eine nach innen offene Nut 15 gebildet.

Es ist vorgesehen, dass die erfindungsgemäße Vorrichtung 4 von der Leitung 1 entfernt (abgeschraubt) wird und die Öffnung in dem Ansatz 2 durch einen Druckstopfen verschlossen wird, wenn die Arbeiten erledigt sind.

Da die erfindungsgemäße Vorrichtung dann ihren Zweck erfüllt hat und nicht mit letzter Sicherheit gewährleistet ist, dass sie noch ordnungsgemäß funktioniert, kann die Vorrichtung geknickt werden, sodass erkennbar ist, dass sie schon einmal benützt worden ist.

Es versteht sich, dass die erfindungsgemäße Vorrichtung nicht nur für Leitungen 1, in denen Wasser als Fluid enthalten ist (Wasserleitungen und Leitungen von Zentralheizungen), sondern auch für Gasleitungen verwendbar ist.

Die erfindungsgemäße Vorrichtung 4, insbesondere deren Signale abgebende Vorrichtung 11, kann so eingerichtet sein, dass bei von dem Drucksensor festgestelltem Druckabfall mit Hilfe einer mobilen App auf einem Smartphone und/oder Tablet ein optisches und/oder akustisches Signal angezeigt bzw. abgegeben wird.

Zusammenfassend kann ein Ausführungsbeispiel der Erfindung wie folgt beschrieben werden:
Eine Vorrichtung 4 zum Überwachen des Druckes eines Fluids, insbesondere Wasser, in einer Leitung 1 umfasst ein Gehäuse 5, in dessen Innenraum ein Drucksensor 8 vorgesehen ist. Der Drucksensor 8 ist über einen Schalter 9 mit einer Stromquelle 12 verbunden, wobei der Schalter 9 durch Betätigen eines Stiftes 10 von außerhalb des Gehäuses 5 eingeschaltet werden kann, um den Drucksensor 8 mit elektrischer Energie zu versorgen. Sobald der Drucksensor 8 einen Druckabfall des Mediums in der Leitung 1 feststellt, löst er das Abgeben eines Signals durch eine Vorrichtung 11 zum Abgeben von Signalen aus.

## Patentansprüche

1. Vorrichtung zum Überwachen des Druckes eines Fluids, insbesondere Wasser oder Gas, in einer Leitung (1), mit einem Gehäuse (5), dessen Innenraum mit der Leitung (1) kommuniziert, mit einem Drucksensor (8) und mit einem Schalter (9), der den Drucksensor (8) aktiviert, wobei die Wand (14) des Gehäuses (5) eine Schwächung (13) aufweist, **dadurch gekennzeichnet, dass** die Schwächung (13) in der Wand (14) des Gehäuses (5) vorgesehen ist, welche Schwächung (13) erlaubt,
das Gehäuse (5) zu knicken, und dass die Schwächung (13) durch eine Nut (15), die in der Wand (14) des Gehäuses (5) vorgesehen ist, gebildet ist.

2. Vorrichtung nach Anspruch 1, **dadurch gekennzeichnet, dass** im Gehäuse (5) ein Stromspeicher (12) vorgesehen ist, der über den Schalter (9) mit dem Drucksensor (8) verbunden ist.

3. Vorrichtung nach Anspruch 1 oder 2, **dadurch gekennzeichnet, dass** mit dem Drucksensor (8) ein Gerät (11) zum Abgeben von optischen und/oder akustischen Signalen verbunden ist.

4. Vorrichtung nach einem der Ansprüche 1 bis 3, **dadurch gekennzeichnet, dass** der Schalter (9) von außerhalb des Gehäuses (5) betätigbar ist.

5. Vorrichtung nach Anspruch 4, **dadurch gekennzeichnet, dass** der Schalter (9) durch einen die Wand (14) des Gehäuses (5) durchgreifenden Stift (10) betätigbar ist.

6. Vorrichtung nach Anspruch 5, **dadurch gekennzeichnet, dass** der Schalter (9) durch wenigstens teilweises Herausziehen des Stiftes (10) einschaltbar ist.

7. Vorrichtung nach einem der Ansprüche 3 bis 6, **dadurch gekennzeichnet, dass** der Signale abgebende Teil (16) des Gerätes (11) zum Abgeben von optischen und/oder akustischen Signalen die Wand (14) des Gehäuses (5) durchgreift.

8. Vorrichtung nach einem der Ansprüche 1 bis 7, **dadurch gekennzeichnet, dass** das Gehäuse (5) über einen Stutzen (6) mit der Leitung (1) verbunden ist, dass der Drucksensor (8) dicht in den Stutzen (6) eingesetzt ist, und dass die Drucksensorfläche (20) des Drucksensors (8) in das Innere des Stutzens (6) weist.

## Claims

1. Device for monitoring the pressure of a fluid, in particular water or gas, in a conduit (1), comprising a housing (5), the interior space of which communicates with the conduit (1), a pressure sensor (8) and a switch (9) which activates the pressure sensor (8), the wall (14) of the housing (5) having a weakening (13), **characterized in that** the weakening (13) is provided in the wall (14) of the housing (5), which weakening (13) allows the housing (5) to buckle, and **in that** the weakening (13) is formed by a groove (15) provided in the wall (14) of the housing (5) .

2. Device according to claim 1, **characterized in that** a current storage device (12) is provided in the housing (5), which is connected to the pressure sensor (8) via the switch (9).

3. Device according to claim 1 or 2, **characterized in that** a device (11) for emitting optical and/or acoustic signals is connected to the pressure sensor (8).

4. Device according to one of claims 1 to 3, **characterized in that** the switch (9) can be actuated from outside the housing (5).

5. Device according to claim 4, **characterized in that** the switch (9) can be actuated by a pin (10) passing through the wall (14) of the housing (5).

6. Device according to claim 5, **characterized in that** the switch (9) can be switched on by at least partially pulling out the pin (10).

7. Device according to one of the claims 3 to 6,
**characterized in that** the signal emitting part (16) of the device (11) passes through the wall (14) of the housing (5) for emitting optical and/or acoustic signals.

8. Device according to one of the claims 1 to 7,
**characterized in that** the housing (5) is connected to the line (1) via a socket (6), that the pressure sensor (8) is tightly inserted into the socket (6), and that the pressure sensor surface (20) of the pressure sensor (8) points into the interior of the socket (6).

## Revendications

1. Dispositif de surveillance de la pression d'un fluide, en particulier de l'eau ou du gaz, dans une conduite (1), comprenant un boîtier (5) dont son espace intérieur communique avec la conduite (1), un capteur de pression (8) et un interrupteur (9) qui active le capteur de pression (8), la paroi (14) du boîtier (5) présentant un affaiblissement (13), **caractérisé en ce que** l'affaiblissement (13) est prévu dans la paroi (14) du boîtier (5), lequel affaiblissement (13) permet de plier le boîtier (5), et **en ce que** l'affaiblissement (13) est formé par une rainure (15) prévue dans la paroi (14) du boîtier (5).

2. Dispositif selon la revendication 1, **caractérisé en ce qu'**un accumulateur de courant (12) est prévu dans le boîtier (5), lequel est relié au capteur de pression (8) par l'intermédiaire de l'interrupteur (9) .

3. Dispositif selon la revendication 1 ou 2, **caractérisé en ce qu'**un appareil (11) destiné à émettre des signaux optiques et/ou acoustiques est relié au capteur de pression (8).

4. Dispositif selon l'une des revendications 1 à 3, **caractérisé en ce que** l'interrupteur (9) est actionnable depuis l'extérieur du boîtier (5).

5. Dispositif selon la revendication 4, **caractérisé en ce que** l'interrupteur (9) est actionnable par une tige (10) traversant la paroi (14) du boîtier (5).

6. Dispositif selon la revendication 5, **caractérisé en ce que** l'interrupteur (9) est enclenchable en retirant au moins partiellement la tige (10).

7. Dispositif selon l'une des revendications 3 à 6, **caractérisé en ce que** la partie (16) de l'appareil (11) émettant des signaux traverse la paroi (14) du boîtier (5) pour émettre des signaux optiques et/ou acoustiques.

8. Dispositif selon l'une des revendications 1 à 7, **caractérisé en ce que** le boîtier (5) est relié à la conduite (1) par une tubulure (6), **en ce que** le capteur de pression (8) est inséré de manière étanche dans la tubulure (6), et **en ce que** la surface de détection de la pression (20) du capteur de pression (8) est orientée vers l'intérieur de la tubulure (6).
